Europäisches Patentamt

European Patent Office

Office européen des brevets

(19)

(11) **EP 0 583 495 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int Cl.$^6$: **G01P 3/489**, F02D 41/24, G01M 15/00

(21) Anmeldenummer: **92113916.8**

(22) Anmeldetag: **14.08.1992**

(54) **Verfahren zur Erkennung und Korrektur von Fehlern bei der Zeitmessung an sich drehenden Wellen**

Method for the detection and correction of errors in time measurements of rotating shafts

Procédé de détection et de correction d'erreurs pour des mesures de temps des arbres tournants

(84) Benannte Vertragsstaaten:
**DE FR GB IT**

(43) Veröffentlichungstag der Anmeldung:
**23.02.1994 Patentblatt 1994/08**

(73) Patentinhaber:
**SIEMENS AKTIENGESELLSCHAFT**
**D-80333 München (DE)**

(72) Erfinder:
- **Angermaier, Anton, Dipl.-Ing. (FH)**
  **W-8300 Landshut (DE)**
- **Wier, Manfred, Dr. Ing.**
  **W-8411 Wenzenbach (DE)**
- **Vogt, Thomas, Dipl.-Ing.**
  **W-8400 Regensburg (DE)**

(56) Entgegenhaltungen:
**EP-A- 0 039 900         EP-A- 0 353 216**
**DE-A- 3 506 233         US-A- 4 216 419**

**Beschreibung**

Die Erfindung betrifft ein Verfahren zur Erkennung und Korrektur von Fehlern bei der Zeitmessung an sich drehenden Wellen, insbesondere an Kurbelwellen oder damit verbundenen Wellen von Brennkraftmaschinen.

Die Zeitmessung erfolgt dabei, indem die Welle selbst oder ein damit verbundenes Geberrad Markierungen aufweist, die von Sensoren abgetastet werden. Es wird die Zeit gemessen, die die Welle braucht, um sich um ein bestimmten Drehwinkel zu drehen. Damit kann allgemein die Drehzahl gemessen werden aber noch spezieller können Drehzahlschwankungen in beliebig genauer Auflösung abhängig vom Abstand der Markierungen auf dem Umfang der Welle oder des Geberrades erfaßt werden.

Solche Messungen werden beispielsweise in Brennkraftmaschinen verwendet, um anhand von kurzzeitigen Verlangsamungen der Winkelgeschwindigkeit der Kurbelwelle Verbrennungsaussetzer zu erkennen. Die Markierungen auf der Kurbelwelle oder dem Geberrad sind dabei in einem Abstand angebracht, der den Arbeitshüben der einzelnen Zylinder entspricht.

Weisen jedoch die Markierungen oder das Geberrad mechanische Fehler oder Ungenauigkeiten auf, wie beispielsweise Winkelfehler der Segmente oder Markierungszähne des Geberrades, Scheibenschlag oder Abweichungen in der Zahnform, so wird die Winkelgeschwindigkeitsmessung verfälscht.

Die Ermittlung von Korrekturwerten für die Korrektur derartiger Fehler ist im Stand der Technik beispielsweise im EP-A-39 900 und im US-A-4 216 419 beschrieben.

Aufgabe der vorliegenden Erfindung ist es daher, alternative Verfahren anzugeben, die es gestatten, solche Fehler zu erkennen und die gemessenen Zeitwerte entsprechend zu korrigieren.

Verfahren zur Lösung dieser Aufgabe sind in den Ansprüchen 1 und 2 angegeben. Die Unteransprüche beschreiben bevorzugte Weiterbildungen dieser Verfahren.

Bei dem ersten erfindungsgemäßen Verfahren werden für ein Bezugssegment im Abstand von zwei Kurbelwellenumdrehungen die Segmentzeiten gemessen. Damit ist es möglich, eine allgemeine Änderung der Drehzahltendenz, die sonst zu fehlerhaften Korrekturen führen würde, zu kompensieren. Die weiteren zwischen diesen beiden Messungen gemessenen Segmentzeiten werden mit diesem Bezugssegment verglichen und in Abhängigkeit von der errechneten Zeitdifferenz wird ein Korrekturwert ermittelt, der zylinderindividuell eine Korrektur der gemessenen Segmentzeit ermöglicht.

Bei dem zweiten erfindungsgemäßen Verfahren werden für ein Bezugssegment im Abstand von einer Kurbelwellenumdrehung die Segmentzeiten gemessen. Damit ist es wiederum möglich, eine allgemeine Änderung der Drehzahltendenz, die sonst zu fehlerhaften Korrekturen führen würde, zu kompensieren. Die weiteren zwischen diesen beiden Messungen gemessenen Segmentzeiten werden mit diesem Bezugssegment verglichen und in Abhängigkeit von der errechneten Zeitdifferenz wird ein Korrekturwert ermittelt, der segmentindividuell eine Korrektur der gemessenen Segmentzeit ermöglicht.

Wie schon eingangs beschrieben, können Zeitabweichungen bei aufeinanderfolgendenen Messungen von Winkelsegmenten unterschiedliche Ursachen haben. Sie können herrühren von einer tatsächlichen Änderung der Winkelgeschwindigkeit der Kurbelwelle oder aber herrühren von fehlerhaften ungleichen Segmentgrößen zwischen den einzelnen Kurbelwellenmarkierungen.

Damit feststeht, daß die gemessenen Unterschiede tatsächlich aufgrund unterschiedlicher Segmentgrößen entstanden sind, müssen Einflüsse, die durch die Zündung und Verbrennung bedingt sind, ausgeschlossen werden. Die Fehlererkennung und Fehlerkorrektur gemäß den erfindungsgemäßen Verfahren wird daher vorzugsweise während des Betriebszustands der Schubabschaltung durchgeführt.

Das Verfahren wird im folgenden anhand der Zeichnungsfiguren näher beschrieben. Es zeigen:

Figur 1    eine schematische Darstellung des ersten erfindungsgemäßen Verfahrens zur Ermittlung von zylinderindividuellen Korrekturwerte

Figur 2    eine schematische Darstellung des zweiten erfindungsgemäßen Verfahrens zur Ermittlung von segmentindividuellen Korrekturwerte.

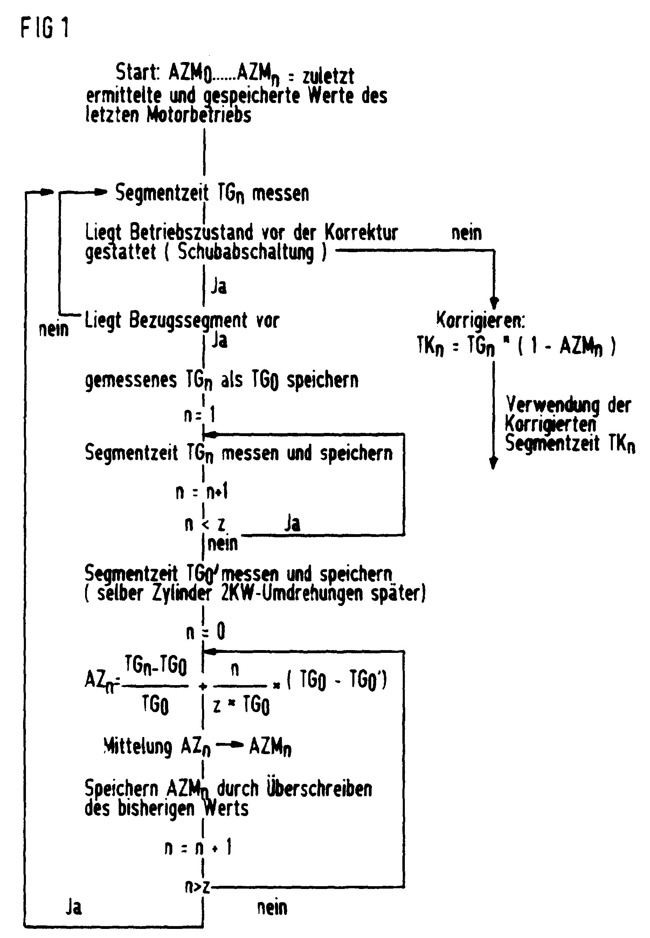

Gemäß dem ersten erfindungsgemäßen Verfahren nach Figur 1 ist angegeben, daß im Verfahrensschritt S1 die Korrekturwerte zu Betriebsbeginn die Werte aufweisen, wie sie beim letzten Motorbetrieb als letzte ermittelte Werte gespeichert wurden. Nach der Ermittlung von neuen Korrekturwerten werden diese alten Korrekturwerte überschrieben. Beim allerersten Betrieb des Motors werden die Korrekturwerte mit Initialisierungswerten vorbesetzt, vorzugsweise mit Null.

Im Verfahrensschritt S2 wird die Segmentzeit $TG_n$ des aktuellen Segments n gemessen.

Im Verfahrensschritt S3 wird geprüft, ob sich die Brennkraftmaschine in einem Betriebszustand befindet, der die Berechnung von neuen Korrekturwerten gestattet, also beispielsweise, ob der Betriebszustand der Schubabschaltung vorliegt. Die Berechnung der Korrekturwerte kann außerdem auf einen bestimmten Drehzahlbereich eingeschränkt werden, um motorspezifische Störungen in bestimmten Drehzahlbereichen fern zu halten. Um eine eventuell auftretende Fehlkorrektur bei sich stark ändernder Drehzahl zu vermeiden, kann in solchen stark instationären Betriebszuständen die Berechnung neuer Korrekturwerte ausgeblendet werden.

Liegt kein solcher Betriebszustand vor, so werden keine neuen Korrekturwerte berechnet, sondern die alten gespeicherten Korrekturwerte finden Verwendung. Es wird verzweigt zum Verfahrensschritt S4, bei dem die gemessene Segmentzeit $TG_n$ mittels des zugehörigen Korrekturwerts $AZM_n$ korrigiert wird nach der Gleichung:

$$TK_n = TG_n * (1 - AZM_n).$$

Die so korrigierte Segmentzeit $TK_n$ kann nun in beliebigen Verfahren verwendet werden, die als Meßgröße die Umdrehungsgeschwindigkeit der Kurbelwelle und insbesondere Änderungen dieser Geschwindigkeit benötigen.

Liegt jedoch ein Betriebszustand vor, der die Berechnung neuer Korrekturwerte gestattet, so wird vom Verfahrensschritt S3 zum Verfahrensschritt S5 verzweigt, in welchem geprüft wird, ob die gemessene Segmentzeit die Zeit des Bezugssegments war. Als Bezugssegment kann ein beliebiges Segment gewählt werden, vorteilhafterweise das erste in der Zündreihenfolge der Zylinder. Dieses Segment wird als fehlerfrei definiert.

Wurde nicht die Segmentzeit des Bezugssegments gemessen, so wird zum Verfahrensschritt S2 zurückgegangen und die nächste Segmentzeit $TG_n$ gemessen.

Lag jedoch das Bezugssegment vor, geht es weiter zum Verfahrensschritt S6, indem die gemessene Segmentzeit $TG_n$ als Segmentzeit des Bezugssegments $TG_O$ gespeichert wird.

Es werden nun in den folgenden Verfahrensschritten S7 bis S10 nacheinander die Segmentzeiten der nachfolgenden Segmente gemessen, die den einzelnen Zylindern der Brennkraftmaschine logisch zugeordnet sind:

Im Verfahrensschritt S7 wird ein Zähler auf den Anfangswert $n = 1$ gesetzt, im Verfahrensschritt S8 wird die aktuelle Segmentzeit $TG_n$ gemessen und gespeichert und im Verfahrensschritt S9 wird der Zähler um 1 erhöht. Ist für alle, den einzelnen Zylindern zugeordnete Segmente, die Segmentzeit ermittelt worden, so wird zum Verfahrensschritt S11 verzweigt, in welchem wiederum die Segmentzeit des Bezugssegments $TG_0'$ - jetzt aber zwei Kurbelwellenumdrehungen später - gemessen und gespeichert wird.

Es werden nun in den folgenden Verfahrensschritten S12 bis S17 nacheinander die Korrekturwerte für die einzelnen den Zylindern zugeordnete Segmente errechnet:

Im Verfahrensschritt S12 wird ein Zähler auf den Anfangswert $n = 0$ gesetzt, im Verfahrensschritt S13 wird nun der zylinderindividuelle Korrekturwert $AZ_n$ berechnet nach der Gleichung:

$$AZ_n = \frac{TG_n - TG_0}{TG_0} + \frac{n}{z * TG_0} * (TG_0 - TG_0')$$

wobei mit z die Gesamtzahl der Zylinder bezeichnet ist. Diese Gleichung gilt für Viertaktmotoren.

Der Korrekturwert $AZ_n$ wird anschließend einer Mittelung unterzogen, beispielsweise einer gleitenden Mittelung nach der Gleichung:

$$AZM_n = AZM_{n-1} * (1 - MITKO) + AZ_n * MITKO.$$

Die Mittelung ist empfehlenswert, da die systematischen Fehler der Segmente mit zufälligen Fehlern wie Schwankungen des dem Steuerungssystem zugrunde liegenden Systemtakts, Toleranzen bei der Schaltgenauigkeit der Sensoren, allgemeine Schwingungen oder Störungen vom Antriebsstrang her, überlagert sein können.

Der neu ermittelte Korrekturwert wird gespeichert, indem der alte Korrekturwert überschrieben wird (Verfahrensschritt S15).

Im Verfahrensschritt S16 wird der Zähler um 1 erhöht.

Sind alle Korrekturwerte ermittelt, geht man vom Verfahrensschritt S17 wieder zurück zum Verfahrensschritt S2.

Damit, sofern der Betriebszustand der Brennkraftmaschine es gestattet, gleich die nächsten Segmentzeiten zur Ermittlung von Korrekturwerte herangezogen werden können, wird die zuletzt gemessene Segmentzeit $TG_0'$ als neue im näch sten Zyklus zu messende Segmentzeit $TG_n$ verwandt.

Dieses erfindungsgemäße Verfahren erlaubt also die Ermittlung von zylinderindividuellen Korrekturwerten.

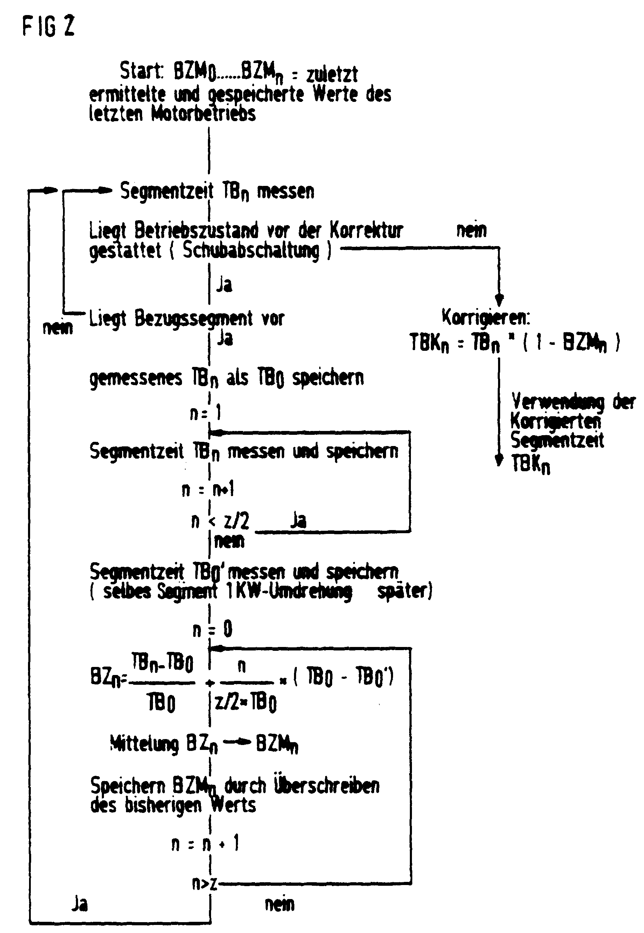

Figur 2 beschreibt eine Variante des in Figur 1 dargestellten Verfahrens. Es werden damit segmentindividuelle Korrekturwerte ermittelt.

Die Verfahrensschritte S1 bis S4 entsprechen den Verfahrensschritten in Figur 1.

Im Verfahrensschritt S5 wird geprüft, ob die gemessene Segmentzeit die des Bezugssegments ist. Das Bezugssegment unterscheidet sich vom Bezugssegment aus dem ersten Verfahren dadurch, daß es sich nicht mehr einem bestimmten Zylinder zuordnen läßt, sondern es sich hier nur um ein bestimmtes markiertes Segment der Kurbelwelle handelt, das als fehlerfrei definiert wird. Lag das Bezugssegment nicht vor, wird wieder zum Verfahrensschritt S2 verzweigt und die nächste Segmentzeit gemessen.

Lag jedoch das Bezugssegment vor, wird die gemessene Segmentzeit $TB_n$ als Segmentzeit des Bezugssegments

$TB_0$ gespeichert (Verfahrensschritt S6).

Für alle Segmente, die sich auf der Kurbelwelle im Verlauf einer Umdrehung befinden, wird nun in den folgenden Verfahrensschritten S7 bis S10 die jeweilige Segmentzeit gemessen. Als Obergrenze für die Segmentzahl wird dabei die halbe Zylinderzahl verwendet. Das Verfahren eignet sich also nur für geradzahlige Zylinderzahlen.

Im Verfahrensschritt SII wird die Segmentzeit $TG_0'$ des Bezugssegmentes eine Kurbelwellenumdrehung später gemessen und gespeichert.

Es werden nun nacheinander in den Verfahrensschritten S12 bis S17 die Korrekturwerte für die einzelnen Segmente berechnet nach der Gleichung:

$$BZ_n = \frac{TB_n - TB_0}{TB_0} + \frac{n}{z/2 * TB_0} * (TB_0 - TB_0')$$

Mit z ist die Gesamtzahl der Zylinder bezeichnet. Diese Gleichung gilt für Viertaktmotoren.

Die Korrekturwerte werden gemittelt (Verfahrensschritt S14) und gespeichert durch Überschreiben der alten Korrekturwerte (Verfahrensschritt S15).

Sind für alle Segmente die Korrekturwerte ermittelt worden, wird vom Verfahrensschritt S17 wieder zum Verfahrensschritt S2 gegangen. Auch hier wird, damit sofern der Betriebszustand der Brennkraftmaschine es gestattet, gleich die nächsten Segmentzeiten zur Ermittlung von Korrekturwerte herangezogen werden können, die zuletzt gemessene Segmentzeit $TB_0'$ als neue im nächsten Zyklus zu messende Segmentzeit $TB_n$ verwandt.

**Patentansprüche**

1. Verfahren zur Erkennung und Korrektur von Fehlern bei der Bestimmung der Segmentzeit, die eine Welle, insbesondere eine Kurbelwelle oder eine damit verbundene Welle in einer Brennkraftmaschine, benötigt, um sich um eine definierte Winkelspanne zu drehen, wobei diese Welle oder ein damit verbundenes Geberrad Markierungen aufweist, die von einem dazu passenden Sensor abgetastet werden
**dadurch gekennzeichnet**, daß

- die Segmentzeit ($TG_0$) eines Bezugssegments eines Bezugszylinders gemessen und gespeichert wird, anschließend
- nacheinander für alle Zylinder (n) die Segmentzeiten ($TG_n$) der den einzelnen Zylindern zugehörigen Kurbelwellensegmente gemessen und gespeichert werden, danach
- die Segmentzeit ($TG_0'$) des Segments desselben Bezugszylinders zwei Kurbelwellenumdrehungen später gemessen und gespeichert wird, und daß dann - nacheinander für alle Zylinder (n) der Brennkraftmaschine jeweils ein Korrekturwert ($AZ_n$) berechnet wird, nach der Gleichung

$$AZ_n = \frac{TG_n - TG_0}{TG_0} + \frac{n}{z * TG_0} * (TG_0 - TG_0')$$

wobei mit

- z die Zahl der Zylinder bezeichnet ist,

- anschließend der jeweilige Korrekturwert ($AZ_n$) einer Mittelung unterzogen wird und

- dieser gemittelte Korrekturwert ($AZM_n$) gespeichert wird,

- und daß mittels dieser Korrekturwert ($AZM_n$) die tatsächlich gemessenen Segmentzeiten ($TG_n$) korrigiert werden ($TK_n$) nach der Gleichung

$$TK_n = TG_n * (1 - AZM_n)$$

2. Verfahren zur Erkennung und Korrektur von Fehlern bei der Bestimmung der Segmentzeit, die eine Welle, insbesondere eine Kurbelwelle oder eine damit verbundene Welle in einer Brennkraftmaschine, benötigt, um sich um eine definierte Winkelspanne zu drehen, wobei diese Welle oder ein damit verbundenes Geberrad Markierungen aufweist, die von einem dazu passenden Sensor abgetastet werden
**dadurch gekennzeichnet**, daß

- die Segmentzeit ($TB_0$) eines Bezugssegments eines Bezugszylinders gemessen und gespeichert wird, anschließend

- nacheinander die Segmentzeiten ($TB_n$) aller Segmente der Kurbelwelle gemessen und gespeichert werden, danach

- die Segmentzeit ($TB_0'$) desselben Segments eine Kurbelwellenumdrehung später gemessen und gespeichert wird, und daß dann

- nacheinander für alle Segmente (n) ein Korrekturwert ($BZ_n$) berechnet wird, nach der Gleichung

$$BZ_n = \frac{TB_n - TB_0}{TB_0} + \frac{n}{z/2 \cdot TB_0} \cdot (TB_0 - TB_0') \, ,$$

wobei mit

- z die Zahl der Zylinder bezeichnet ist,

- anschließend der jeweilige Korrekturwert ($BZ_n$) einer Mittelung unterzogen wird und

- dieser gemittelte Korrekturwert ($BZM_n$) gespeichert wird,

- und daß mittels dieser Korrekturwerte ($BZM_n$) die tatsächlich gemessenen Segmentzeiten ($TB_n$) korrigiert werden ($TBK_n$) nach der Gleichung

$$TBK_n = TB_n \cdot (1 - BZM_n)$$

3. Verfahren nach einem der vorherigen Ansprüche
**dadurch gekennzeichnet**, daß
die Berechnung der Korrekturwerte im Betriebszustand der Schubabschaltung durchgeführt wird.

4. Verfahren nach einem der vorherigen Ansprüche
**dadurch gekennzeichnet**, daß
die Berechnung der Korrekturwerte nur innerhalb vorgebbarer Drehzahlgrenzen durchgeführt wird.

5. Verfahren nach einem der vorherigen Ansprüche
**dadurch gekennzeichnet**, daß
die Berechnung der Korrekturwerte nur durchgeführt wird, wenn Änderungen der Drehzahl der Brennkraftmaschine unterhalb eines vorgegebbaren Grenzwertes liegen.

6. Verfahren nach einem der vorherigen Ansprüche
**dadurch gekennzeichnet**, daß
die Mittelung der Korrekturwerte in Form einer gleitenden Mittelung erfolgt nach der Gleichung:

$$AZM_n = AZM_{n-1} \cdot (1-MITKO) + AZ_n \cdot MITKO \text{ bzw.}$$

$$BZM_n = BZM_{n-1} \cdot (1-MITKO) + BZ_n \cdot MITKO \, ,$$

wobei MITKO eine wählbare Mittelungskonstante darstellt mit einem Wertbereich zwischen Null und Eins.

7. Verfahren nach einem der vorherigen Ansprüche
**dadurch gekennzeichnet**, daß
beim allerersten Betriebsbeginn die Korrekturwerte ($AZ_n$, $BZ_n$) mit Initialisierungswerten vorbesetzt werden, vorzugsweise mit Null, und bei jedem weiteren Betriebsbeginn die Korrekturwerte ($AZ_n$, $BZ_n$) auf die zuletzt ermittelten und gespeicherten Werte des letzten Motorbetriebs gesetzt werden und die Korrektur der Segmentzeiten erst nach einer vorgebbaren Zahl (ZS) von Schritten zur Berechnung der Korrekturwerte erfolgt.

8. Verfahren nach Anspruch 7,
**dadurch gekennzeichnet**, daß
die vorgebbare Zahl (ZS) von Schritten zur Berechnung der Korrekturwerte umgekehrt proportional ist zur Mittelungskonstanten MITKO.

**Claims**

1. Method for the detection and correction of errors during the determination of the segment time which a shaft, in particular a crankshaft or a shaft connected thereto in an internal combustion engine, requires to rotate through a defined angular range, this shaft, or a sensor wheel connected thereto, having marks which are sensed by a matching sensor, characterized in that

   - the segment time ($TG_0$) of a reference segment of a reference cylinder is measured and stored, subsequently
   - the segment times ($TG_n$) of the crankshaft segments associated with the individual cylinders are successively measured and stored for all the cylinders (n), after this,
   - the segment time ($TG_0'$) of the segment of the same reference cylinder is measured two crankshaft rotations later and is stored, and in that in each case a correction value ($AZ_n$) is then successively calculated for all the cylinders (n) of the internal combustion engine according to the equation

$$AZ_n = \frac{TG_n - TG_0}{TG_0} + \frac{n}{z^*TG_0} * (TG_0 - TG_0')$$

   where

   - z designates the number of cylinders,
   - subsequently the respective correction value ($AZ_n$) is subjected to averaging and
   - this averaged correction value ($AZM_n$) is stored, and
   - in that the segment times ($TG_n$) actually measured are corrected ($TK_n$) using these correction values ($AZM_n$) according to the equation

$$TK_n = TG_n * (1 - AZM_n)$$

2. Method for the detection and correction of errors during the determination of the segment time which a shaft, in particular a crankshaft or a shaft connected thereto in an internal combustion engine, requires in order to rotate through a defined angular range, this shaft, or a sensor wheel connected thereto, having marks which are sensed by a matching sensor, characterized in that

   - the segment time ($TB_0$) of a reference segment of a reference cylinder is measured and stored, subsequently
   - the segment times ($TB_0$) of all the segments of the crankshaft are successively measured and stored, after this
   - the segment time ($TB_0'$) of the same segment is measured one crankshaft rotation later and stored, and in that then
   - a correction value ($BZ_n$) is successively calculated for all the segments (n) according to the equation

$$BZ_n = \frac{TB_n - TB_0}{TB_0} + \frac{n}{z/2^*TB_0} * (TB_0 - TB_0') ,$$

   where

   - z designates the number of cylinders
   - subsequently the respective correction value ($BZ_n$) is subjected to averaging and
   - this averaged correction value ($BZM_n$) is stored,
   - and in that the segment times ($TB_n$) actually measured are corrected ($TBK_n$) using these correction values ($BZM_n$) according to the equation

$$TBK_n = TB_n * (1 - BZM_n)$$

3. Method according to one of the preceding claims, characterized in that the calculation of the correction values is carried out in the overrun fuel cut-off operating state.

4. Method according to one of the preceding claims, characterized in that the correction values are calculated only within prescribable rotational speed limits.

5. Method according to one of the preceding claims, characterized in that the correction values are calculated only if there are changes in the rotational speed of the internal combustion engine below a prescribable limit value.

6.  Method according to one of the preceding claims, characterized in that the averaging of the correction values takes place in the form of sliding averaging according to the equation:

$$AZM_n = AZM_{n-1} * (1\text{-MITKO}) + AZ_n * \text{MITKO and}$$

$$BZM_n = BZM_{n-1} * (1\text{-MITKO}) + BZ_n * \text{MITKO,}$$

MITKO constituting a selectable averaging constant with a value range between zero and one.

7.  Method according to one of the preceding claims, characterized in that when operation is first started the correction values ($AZ_n$, $BZ_n$) are preset with initialization values, preferably with zero, and whenever operation is started again the correction values ($AZ_n$, $BZ_n$) are set to the last values of the engine operation to be identified and stored, and the correction of the segment times does not take place until after a prescribable number (ZS) of steps for calculating the correction values.

8.  Method according to Claim 7, characterized in that the prescribable number (ZS) of steps for calculating the correction values is inversely proportional to the averaging constant MITKO.

## Revendications

1.  Procédé d'identification et de correction d'erreurs pour la détermination du temps de segment, que nécessite un arbre, en particulier un vilbrequin, ou bien un arbre qui en est solidaire dans un moteur à combustion interne, pour tourner d'un angle défini, cet arbre ou une roue transmettrice qui en est solidaire présentant des repères explorés par un capteur passant devant eux,
    caractérisé en ce que

    -   le temps de segment ($TG_0$) d'un segment de référence d'un cylindre de référence est mesuré et mis en mémoire, puis
    -   les temps de segment ($TG_n$) des segments de vilbrequin correspondants aux différents cylindres sont mesurés les uns après les autres pour tous les cylindres (n) et mis en mémoire, puis
    -   le temps de segment ($TG_0'$) du segment de ce même cylindre de référence étant mesuré deux tours de vilbrequin plus tard et mis en mémoire, puis une valeur de correction ($AZ_n$) est calculée - pour tous les cylindres (n) les uns après les autres du moteur à combustion interne -, le calcul se faisant selon l'équation

$$AZ_n = \frac{TG_n\text{-}TG_0}{TG_0} + \frac{n}{z^*TG_0} * (TG_0\text{-}TG_0') ,$$

dans laquelle

    -   z désigne le nombre de cylindres,
    -   la valeur de correction ($AZ_n$) respective étant soumise ensuite à une opération de formation de la moyenne, et
    -   cette valeur de correction ($AZM_n$) mise sous forme d'une moyenne est mise en mémoire,
    -   et en ce qu'au moyen de cette valeur de correction ($AZM_n$) on corrige les temps de segment ($TG_n$) effectivement mesurés pour obtenir ($TK_n$) selon l'équation ;

$$TK_n = TG_n * (1 - AZM_n)$$

2.  Procédé d'identification et de correction d'erreurs pour la détermination du temps de segment, que nécessite un arbre, en particulier un vilbrequin, ou bien un arbre qui en est solidaire dans un moteur à combustion interne, pour tourner d'un angle défini, cet arbre ou une roue transmettrice qui en est solidaire présentant des repères explorés par un capteur passant devant eux,
    caractérisé en ce que

    -   le temps de segment ($TB_0$) d'un segment de référence d'un cylindre de référence est mesuré et mis en mémoire, puis
    -   les temps de segment ($TB_n$) de tous les segments du vilbrequin sont mesurés les uns après les autres et mis en mémoire, puis

- le temps de segment ($TB_0'$) de ce même segment étant mesuré un tour du vilbrequin plus tard et mis en mémoire, puis

- une valeur de correction ($BZ_n$) est calculée - pour tous les segments (n), selon l'équation

$$BZ_n = \frac{TB_n\text{-}TB_0}{TB_0} + \frac{n}{z/2*TB_0} * (TB_0\text{-}TB_0') \,,$$

dans laquelle

- z désigne le nombre de cylindres,
- la valeur de correction ($BZ_n$) respective étant soumise ensuite à une opération de formation de la moyenne, et
- cette valeur de correction ($BZM_n$) mise sous forme d'une moyenne est mise en mémoire,
- et en ce qu'au moyen de cette valeur de correction ($BZM_n$) on corrige les temps de segment ($TB_n$) effectivement mesurés pour obtenir ($TK_n$) selon l'équation :

$$TBK_n = TB_n * (1 - BZM_n) \,.$$

3. Procédé selon l'une des revendications précédentes, caractérisé en ce que le calcul des valeurs de correction est effectué pendant la coupure de la force motrice.

4. Procédé selon l'une des revendications précédentes, caractérisé en ce que le calcul des valeurs de correction n'est effectué que dans des limites de vitesse de rotation prédéterminées.

5. Procédé selon l'une des revendications précédentes, caractérisé en ce que le calcul des valeurs de correction n'est effectué que lorsque les fluctuations de la vitesse de rotation du moteur à combustion interne se situent au-dessous d'une valeur limite prédéterminée.

6. Procédé selon l'une des revendications précédentes, caractérisé en ce que la prise en moyenne des valeurs de correction sous la forme d'une moyenne glissante s'effectue d'après l'équation :

$$AZM_n = AZM_{n\text{-}1} * (1\text{-MITKO}) + AZ_n * MITKO, \text{ respectivement}$$

$$BZM_n = BZM_{n\text{-}1} * (1\text{-MITKO}) + BZ_n * MITKO,$$

dans laquelle MITKO représente une constante de mise en moyenne pouvant être choisie à volonté, avec une plage de valeurs comprises entre zéro et un.

7. Procédé selon l'une des revendications précédentes, caractérisé en ce que, lors du tout premier début de fonctionnement, les valeurs de correction ($AZ_n$, $BZ_n$) se voient affecter des valeurs d'initialisation, de préférence une valeur zéro, et à chaque autre début de fonctionnement les valeurs de correction ($AZ_n$, $BZ_n$) se voient affecter les dernières valeurs déterminées et mises en mémoire du dernier fonctionnement moteur et la correction des temps de segment s'effectue ensuite une fois atteint un nombre (ZS) prédéterminé d'étapes de calcul des valeurs de correction.

8. Procédé selon la revendication 7, caractérisé en ce que le nombre (ZS) prédéterminé d'étapes de calcul des valeurs de correction est inversement proportionnel à la constante de mise en moyenne MITKO.

EP 0 583 495 B1

## FIG 1

Start: $AZM_0 \ldots AZM_n$ = zuletzt ermittelte und gespeicherte Werte des letzten Motorbetriebs

Segmentzeit $TG_n$ messen

Liegt Betriebszustand vor der Korrektur gestattet ( Schubabschaltung ) ————————— nein

Ja

Liegt Bezugssegment vor

nein          Ja

gemessenes $TG_n$ als $TG_0$ speichern

$n = 1$

Segmentzeit $TG_n$ messen und speichern

$n = n+1$

$n < z$          Ja

nein

Segmentzeit $TG_0'$ messen und speichern ( selber Zylinder 2KW-Umdrehungen später)

$n = 0$

$$AZ_n = \frac{TG_n - TG_0}{TG_0} + \frac{n}{z \cdot TG_0} \cdot ( TG_0 - TG_0' )$$

Mittelung $AZ_n \rightarrow AZM_n$

Speichern $AZM_n$ durch Überschreiben des bisherigen Werts

$n = n + 1$

$n > z$ ————————— nein

Ja

Korrigieren:
$$TK_n = TG_n \cdot ( 1 - AZM_n )$$

Verwendung der Korrigierten Segmentzeit $TK_n$

## FIG 2

Start: $BZM_0$......$BZM_n$ = zuletzt ermittelte und gespeicherte Werte des letzten Motorbetriebs

Segmentzeit $TB_n$ messen

Liegt Betriebszustand vor der Korrektur gestattet ( Schubabschaltung ) ——— nein

Ja

Liegt Bezugssegment vor

nein

Ja

gemessenes $TB_n$ als $TB_0$ speichern

n = 1

Segmentzeit $TB_n$ messen und speichern

n = n+1

n < z/2      Ja

nein

Segmentzeit $TB_0'$ messen und speichern
( selbes Segment 1 KW-Umdrehung   später)

n = 0

$$BZ_n = \frac{TB_n - TB_0}{TB_0} + \frac{n}{z/2 \cdot TB_0} \cdot ( TB_0 - TB_0')$$

Mittelung $BZ_n$ ——► $BZM_n$

Speichern $BZM_n$ durch überschreiben des bisherigen Werts

n = n + 1

n>z

Ja           nein

Korrigieren:
$$TBK_n = TB_n \cdot ( 1 - BZM_n )$$

Verwendung der Korrigierten Segmentzeit $TBK_n$